# EUROPÄISCHE PATENTSCHRIFT

(11) **EP 2 567 801 B1**
(45) Veröffentlichungstag und Bekanntmachung des Hinweises auf die Patenterteilung: **03.01.2018**
(21) Anmeldenummer: 12177296.6
(22) Anmeldetag: 20.07.2012
(51) Int. Cl.: B29C 45/14, B25J 15/02, B25J 15/00, G09F 3/00, G09F 3/04, G09F 3/02

(54) **Verfahren zum Hinterspritzen eines Dekors**
Process to inject at the backside of a decor
Procédé pour injecter à l'arrière d'un décor

(30) Priorität: 07.09.2011 DE 102011082308
(43) Veröffentlichungstag der Anmeldung: 13.03.2013
(73) Patentinhaber: Faurecia Innenraum Systeme GmbH, 76767 Hagenbach (DE)
(72) Erfinder: Zemmrich, René, 57518 Betzdorf (DE); Wandtke, Sebastian, 69115 Heidelberg (DE)
(74) Vertreter: Richardt Patentanwälte PartG mbB

(56) Entgegenhaltungen:
- FR-A1- 2 903 041
- JP-A- H09 174 680
- US-A1- 2006 125 153

## Beschreibung

Die Erfindung betrifft ein Verfahren zum Hinterspritzen eines Dekors mit einer Spritzgussvorrichtung. Insbesondere im Kraftfahrzeugbereich werden Dekore eingesetzt, um damit Oberflächen zu kaschieren. Die Oberflächen muten dadurch hochwertig an. Viele Dekore weisen außer ihrer eigentlichen Dekorschicht zusätzlich auch noch eine Polsterung in Form einer Lage aus Schaum auf. Diese zusätzliche Schaumlage erhöht die Dicke des Dekors.

Bei einem Hinterspritzvorgang des Dekors muss in allen Fällen gewährleistet werden, dass das Dekor mit einer vordefinierten Kraft im Spritzgusswerkzeug gehalten wird. Aufgrund jedoch der unterschiedlichen Dicken von Dekoren muss in jedem Fall für jede spezielle Dekordicke ein entsprechender Halter für das Dekor im Spritzgusswerkzeug bereitgestellt werden, um das Dekor für den Hinterspritzvorgang in einer vordefinierten Position zu platzieren. Da insbesondere die erhöhte Dicke eines Dekors die Klemmkräfte des Halters, die auf das Dekor einwirken, vergrößert, besteht die Gefahr einer bleibenden Verformung des Dekors im Bereich der Klemmstelle nach dem Hinterspritzen.
Die EP 0 143 878 B1 zeigt eine Formspannvorrichtung für Spritzgießmaschinen. Die EP 0 506 218 B1 zeigt ein Verfahren und eine Vorrichtung zur Herstellung dekorbeschichteter Kunststoffformteile. Ferner ist aus der EP 0 936 042 B1 ein Formwerkzeug mit einer Schlupfspanneinrichtung zum Positionieren einer Dekormaterialschicht und ein Verfahren zum Herstellen von Formteilen bekannt. Die WO 99/47328 zeigt eine Vorrichtung und ein Verfahren zum Hinterpressen und/oder Hinterspritzen sowie zum Einfassen eines Dekormaterials mit einem Trägermaterial. Die DE 199 56 338 C2 zeigt eine Vorrichtung und ein Verfahren zum Herstellen von verkleideten Formteilen. Ferner ist aus der WO 2005/058574 A2 ein Verfahren zum Herstellen von Spritzgussteilen bekannt. Die Offenlegungsschrift DE 10 2008 021 559 A1 zeigt ein Verfahren und eine Vorrichtung zur Befestigung einer Dekorfolie an einem Trägerteil. Aus der WO 2010/130300 A1 ist ebenfalls ein Verfahren und eine Vorrichtung zur Herstellung eines eine Dekoroberfläche aufweisenden Bauteils bekannt. In der JP-H09174680 ist ein Klemmelement für eine Folie gezeigt, wobei eine der Klemmbacken Aussparungen im Klemmbereich aufweist. US2006/125153 zeigt ein Verfahren zum Hinterspritzen eines Dekors mit einer Spritzgussvorrichtung, wobei die Spritzgussvorrichtung einen Dekorhalter aufweist. Demgegenüber liegt der Erfindung die Aufgabe ein verbessertes Verfahren zum Hinterspritzen eines Dekors mit einer Spritzgussvorrichtung zu schaffen.

Die der Erfindung zugrunde liegenden Aufgaben wird mit den Merkmalen des unabhängigen Patentanspruchs gelöst. Bevorzugte Ausführungsformen der Erfindung sind in den abhängigen Patentansprüchen angegeben.

Ausführungsformen der Erfindung können den Vorteil haben, dass Verfahren mit einem universalen Dekorhalter für eine Spritzgussvorrichtung bereitgestellt werden kann, welcher für unterschiedliche Dicken von Dekoren zum Einsatz kommen kann. Grundsätzlich ist die Klemmkraft des Dekorhalters von der Dicke des Dekors abhängig, wobei bei zu hoher Klemmkraft irreversible Deformationen des Dekorbauteils nach dem Hinterspritzen entstehen können. Die Ausführungsformen der vorliegenden Erfindung wirken diesem nachteiligen Effekt entgegen, indem die Klemmstelle in mehrere Bereiche aufgeteilt wird. Diese unterschiedlichen Bereiche weisen ein jeweils zu einer Dekordicke korrespondierendes Spaltmaß auf. Somit ist gewährleistet, dass auf unterschiedliche dicke Dekore trotzdem gleiche Klemmkräfte wirken, wenn das Dekor in den Bereich mit dem zugehörigen Spaltmaß eingelegt wird. Eine lokale Einschnürung auf die Klemmstelle kann somit vermieden werden, was zu einer erheblichen Verbesserung der Qualität führt.

Die unterschiedlichen Spaltmaße können aus einer Vertiefung des ersten Klemmelements im Klemmbereich. Insgesamt ergibt sich dadurch ein Abschnitt des Klemmbereichs, welcher ein höheres Spaltmaß hat und ein weiterer Abschnitt des Klemmbereichs, welcher ein geringeres Spaltmaß aufweist. Es sei jedoch angemerkt, dass die Anzahl der Spaltmaße nicht auf lediglich zwei Spaltmaße begrenzt ist. Theoretisch ist es möglich, dass hier ein Dekorhalter zur Verwendung für eine Vielzahl von Spaltmaßen zum Einsatz kommt.
Das zweite Klemmelement kann frei von zur mechanischen Fixierung des Dekors im Klemmbereich vorhandenen Vertiefungen. Damit hängt die Größe der Klemmkraft ausschließlich von der geometrischen Form des ersten Klemmelements ab. Es sei hier angemerkt, dass nichtsdestotrotz das zweite Klemmelement Vertiefungen aufweisen kann, wobei jedoch diese Vertiefungen nicht zur Klemmkraft, mit welcher das Dekor zwischen dem ersten und zweiten Klemmelement gehalten wird, beitragen.
Das erste Klemmelement ist beispielsweise dazu ausgebildet, eine Klemmbacke im Klemmbereich aufzunehmen, wobei die Vertiefung durch die Klemmbacke hervorgerufen wird. Vorzugsweise ist die Klemmbacke auswechselbar. Somit kann insgesamt in mechanisch einfacher Weise eine Anpassung des Dekorhalters an verschiedene Dekordicken realisiert werden. Hierzu muss lediglich in das erste Klemmelement eine entsprechende Klemmbacke eingesetzt werden, wobei hier vorzugsweise diese Klemmbacke wiederum Vertiefungen im Klemmbereich aufweist. Aus diesen Vertiefungen resultiert dann wiederum die Anzahl unterschiedlicher Spaltmaße. Ebenso vorzugsweise ist in diesem Fall wiederum das zweite Klemmelement frei von Vertiefungen. Damit kann in einfacher Weise durch beliebige Entformung der Klemmbacke der benötigte Satz an Spaltmaßen zwischen dem ersten und zweiten Klemmelement definiert werden. Die geometrische Form des zweiten Klemmelements braucht hier also nicht mehr berücksichtigt werden.

Der Dekorhalter kann dazu ausgebildet sein, dass Dekor mit einer konstanten vordefinierten Klemmkraft in dem Klemmbereich zu halten. Für den Fall, dass aufgrund des Hinterspritzvorgangs eine stärker werdende Kraft auf das Dekor im Klemmbereich ausgeübt wird, kann also das Dekor langsam aus dem Klemmbereich herausrutschen und damit nachgeben. Dies trägt ebenfalls dazu bei, dass eine lokale Einschnürung um die Klemmstelle trotz einer aufgrund des Hinterspritzvorgangs auf das Dekor einwirkenden Kraft vermieden werden können, was weiter zu einer Qualitätsverbesserung führt.

Das zweite Klemmelement kann über ein Scharnier an das erste Klemmelement angelenkt sein. Zum Beispiel umfasst das Scharnier eine Achse und ein Lager für die Achse, wobei die Achse einstückig mit dem zweiten Klemmelement ausgebildet ist und das Achslager einstückig mit dem ersten Klemmelement ausgebildet ist. Dies stellt eine mechanisch hochstabile und dennoch einfache Möglichkeit dar, einen Dekorhalter bereitzustellen, welcher auch beispielsweise beim Hinterspritzen des Dekors mit eingespritztem flüssigem Kunststoff umspült werden kann. Aufgrund der einfachen mechanischen Ausgestaltung ist eine zusätzliche Abdichtung des Dekorhalters gegenüber diesem umspülenden Kunststoff nicht notwendig, da der Kunststoff in einfacher Weise von den mechanisch und geometrisch einfach aufgebauten Komponenten "erstes und zweites Klemmelement" gelöst werden kann. Dies wäre beispielsweise nicht so einfach der Fall, wenn zur Festlegung der Klemmkraft bei verschiedenen Dekordicken ein Federmechanismus zum Einsatz kommen würde, mit welchem in adaptiver Weise in Abhängigkeit von der Dekordicke die Klemmkraft an der Klemmstelle festgelegt werden könnte. Hier wäre eine Abdichtung gegenüber dem eingespritzten Kunststoff notwendig, da sich ein solcher Federmechanismus nicht in einfacher Weise reinigen lässt.

Es sei an dieser Stelle angemerkt, dass das Dekor mit verschiedensten Materialien hinterspritzt werden kann. Dies umfasst neben einem Hinterspritzen mit Schaumstoffen auch das Hinterspritzen mit festen oder weichen Kunststoffen.

Im Weiteren werden bevorzugte Ausführungsformen der Erfindung anhand der Zeichnungen näher erläutert. Es zeigen:
- Fig. 1: eine perspektivische Ansicht eines Dekorhalters mit erstem Klemmelement,
- Fig. 2: eine schematische Ansicht eines Dekorhalters mit erstem und zweitem Klemmelement,
- Fig. 3: eine schematische Ansicht eines Dekorhalters mit eingelegtem Dekor,
- Fig. 4: eine schematische Ansicht eines Dekorhalters mit eingelegtem Dekor.

Im Folgenden werden einander ähnliche Elemente mit den gleichen Bezugszeichen gekennzeichnet.

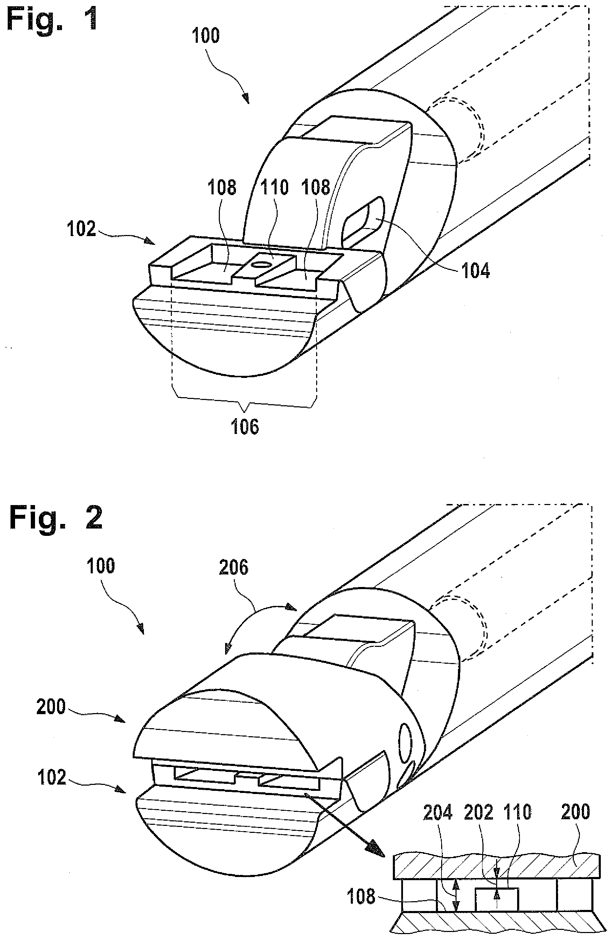

Die Fig. 1 zeigt eine schematische Ansicht eines Dekorhalters 100 für eine Spritzgussvorrichtung zum Halten eines Dekors. Der Dekorhalter 100 weist ein erstes Klemmelement 102 und ein zweites dazu gegenstückiges Klemmelement auf, welches jedoch in Fig. 1 nicht gezeigt ist und nur in Fig. 2 ersichtlich ist (Bezugszeichen 200). Diese beiden Klemmelemente sind dazu ausgebildet, das Dekor durch eine Klemmkraft in einem Klemmbereich 106 zu fixieren, wobei der Klemmbereich 106 zwei unterschiedliche Spaltmaße zwischen dem ersten und zweiten Klemmelement aufweist. Zum besseren Verständnis sei dies mit Bezug auf Fig. 2 erläutert.

In Fig. 2 ist zusätzlich zu den in Fig. 1 ersichtlichen Elementen das zweite Klemmelement 200 gezeigt, welches über ein Scharnier an dem Dekorhalter 100 angelenkt ist. Das Scharnier ist dabei durch ein Achslager 104 (vgl. Fig. 1) und eine nicht näher ersichtliche, an das zweite Klemmelement 200 angespritzte Achse realisiert, wobei diese Achse in das Achslager 104 eingreift.

Das zweite Klemmelement 200 ist über sein Scharnier in Richtung 206 klappbar, wobei im zugeklappten Zustand (gezeigt in Fig. 2) im Klemmbereich 106 ein dort befindliches Dekor zwischen dem ersten und zweiten Klemmelement fixierbar ist.

Hierzu weist das erste Klemmelement 102 eine Vertiefung 108 und eine weitere Vertiefung 110 auf. Der Abstand des Bodens der Vertiefung 108 von der Unterseite des zweiten Klemmelements 200 ist dabei mit einem Spaltmaß 204 größer als der Abstand 202 des Bodens der Vertiefung 110 von der Unterseite des zweiten Klemmelements. Insgesamt ergeben sich dadurch zwei Spaltmaße 202 und 204, wobei in dem jeweilig zugehörigen Spalt zwischen ersten und zweiten Klemmelement unterschiedlich dicke Dekore aufgenommen und fixiert werden können.

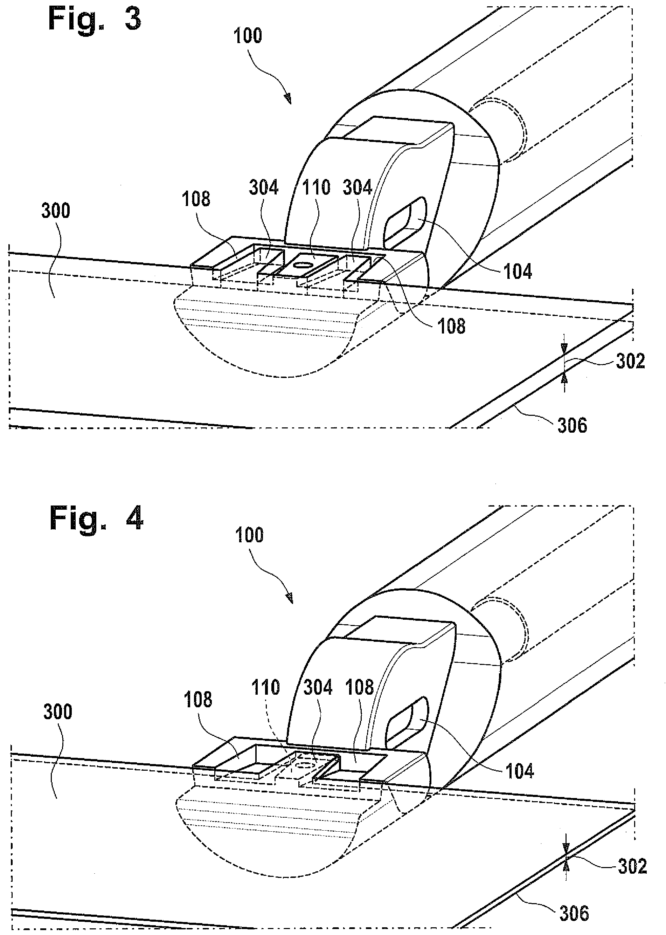

Die Fig. 3 zeigt beispielsweise ein Dekor 300 mit einer Dicke 302, wobei das in Fig. 3 gezeigte Dekor im Folgenden ais "dickes Dekor" bezeichnet sein soll.

Das Dekor 300 weist an seinem Rand zungenförmigen Ausformungen 304 auf, welche so ausgeformt sind, dass diese in den Abschnitt 108 (in die Vertiefung 108) des ersten Klemmelements eingreifen können. Wird nun der in Fig. 3 nicht gezeigte Deckel, das heißt das zweite Klemmelement 200 geschlossen, so wird durch das zweite Klemmelement 200 eine Klemmkraft auf diese zungenförmigen Ausformungen 304 ausgeübt. Damit wird das Dekor 300 über die zungenförmigen Ausformungen 308 im Abschnitt 108 fixiert. Wird nun das Dekor an seiner Unterseite 306 hinterspritzt, kann sich das Dekor nach oben wölben. Wird dabei die von unten auf das Dekor wirkende Kraft größer als die im Abschnitt 108 wirkende Klemmkraft, so kann das Dekor 300 mit seinen zungenförmigen Ausformungen 304 aus dem Bereich 108 herausrutschen. Dadurch wird eine Einschnürung des Dekors um die Klemmstelle vermieden.

Während in Fig. 3 der Dekorhalter für ein dickes Dekor 300 verwendet wurde, wird in Fig. 4 derselbe Dekorhalter für ein dünnes Dekor 300 verwendet. Die Dicke 302 des dünnen Dekors ist dabei geringer als die Dicke 302 des dicken Dekors. Für den Hinterspritzvorgang wird nun wiederum der Randbereich des Dekors in den Klemmbereich eingelegt, wobei jedoch in diesem Fall das Dekor 300 eine zungenförmige Ausformung an seinem Rand aufweist (Bezugszeichen 304), welche in den Abschnitt 110 des Klemmbereichs des Dekorhalters 100 eingelegt werden kann. Wird nun wiederum das zweite Klemmelement auf das erste Klemmelement aufgeklappt, wirkt dadurch eine Klemmkraft ausschließlich im Bereich 110 auf das Dekor 300 über die zungenförmige Ausformung 304. In den Bereichen 108 wirkt hingegen keine Klemmkraft.

Das Spaltmaß in den Bereichen 108 und 110 ist nun genau so festgelegt, dass es auf die jeweilige Dicke 302 der zugehörige Dekormaterialien optimiert ist. So ist es beispielsweise möglich, diese zugehörigen Spaltmaße so zu wählen, dass durch eine einzelne Schließposition des zweiten Klemmelements für das jeweils verwendete Dekor exakt dieselbe Klemmkraft aufgewendet wird. Damit kann mit einem einzelnen Dekorhalter und einer einzelnen Schließposition des Dekorhalters einer Vielzahl von verschiedenen Dicken von Dekormaterialien durch das Vorsehen verschiedener entsprechender Spaltmaße ein sauberer Hinterspritzvorgang gewährleistet werden. Denn durch die Abschnitte 108 und 110 werden verschiedene Vertiefungen des ersten Klemmelements gegenüber dem zweiten Klemmelement definiert, woraus unterschiedliche Spaltmaße 204 und 202 resultieren. Diese Spaltmaße können dabei für verschiedene Dekordicken optimiert werden.

Würde das Spaltmaß nicht an die Dekordicke angepasst werden, würde ein dünneres Dekor zu locker oder ein dickeres Dekor zu fest in der Klemmvorrichtung sitzen, wodurch es im erstgenannten Fall zu einer ungewollten Verschiebung bis zum Schließvorgang des Spritzgusswerkzeugs, im zweiten Fall wiederum zur lokalen Einschnürung um die Klemmstelle kommen könnte. Mittels des in den vorigen Figuren gezeigten Dekorhalters kann dies jedoch zuverlässig vermieden werden, indem die Klemmstelle in mehrere Bereiche aufgeteilt wird und diese unterschiedlichen Bereiche jeweils ein zu einer Dekordicke korrespondierendes Spaltmaß aufweisen. In den zugehörigen Spalt wird dann eine zungenförmige Ausformung des Dekormaterials 300 eingelegt. Danach wird das Dekor durch die Klemmkraft in dem jeweiligen Klemmbereich fixiert und anschließend erfolgt das Hinterspritzen des Dekors.

### Bezugszeichenliste

- 100: Dekorhalters
- 102: erstes Dekorelement
- 104: Achslager
- 106: Klemmbereich
- 108: Vertiefung
- 110: Vertiefung
- 200: zweites Klemmelement
- 202: Spaltmaß
- 204: Spaltmaß
- 206: Bewegungsrichtung
- 300: Dekor
- 302: Dicke
- 304: Zunge
- 306: Unterseite

## Patentansprüche

1. Verfahren zum Hinterspritzen eines Dekors (300) mit einer Spritzgussvorrichtung, wobei die Spritzgussvorrichtung einen Dekorhalter (100) aufweist, wobei das Dekor an seinem Rand so ausgeformt ist, dass es mit dieser Ausformung in einem Abschnitt (108, 110) des Klemmbereichs (106) des Dekorhalters (100) mit genau einem Spaltmaß (202; 204) fixierbar ist, wobei der Klemmbereich (106) in mehrere Abschnitte (108, 110) unterteilt ist, wobei ein erster Abschnitt (110) ein erstes Spaltmaß (202) und ein zweiter Abschnitt (108) ein zweites Spaltmaß (204) aufweist, wobei diese unterschiedlichen Abschnitte (108, 110) ein zu einer Dekordicke korrespondierendes Spaltmaß (202, 204) aufweisen, wobei der Randbereich (304) des Dekors zungenförmig ist und zungenförmig in den Abschnitt des Klemmbereichs eingreift, wobei das Verfahren die Schritte umfasst:
- Einlegen des Randbereichs (304) des Dekors (300) in den Klemmbereich (106),
- Fixierung des Dekors (300) durch die Klemmkraft in dem Klemmbereich (106),
- Hinterspritzen des Dekors (300).

2. Verfahren nach Anspruch 1, wobei der Dekorhalter das Dekor mit einer konstanten definierten Klemmkraft im Klemmbereich fixiert.

## Claims

1. A method for back moulding of a decoration (300) using an injection moulding device, wherein the injection moulding device has a decoration holder (100), wherein the decoration is shaped at its edge such that it can be fixed by means of this shaping in a portion (108,110) of the clamping region (106) of the decoration holder (100) with exactly one gap dimension (202; 204), wherein the clamping region (106) is divided into a number of portions (108, 110), wherein a first portion (110) has a first gap dimension (202) and a second portion (108) has a second gap dimension (204), wherein these different portions (108, 110) have a gap dimension (202, 204) corresponding to a decoration thickness, wherein the edge region (304) of the decoration is tongue-shaped and engages in a tongue-shaped manner in the portion of the clamping region, wherein the method comprises the following steps:
- inserting the edge region (304) of the decoration (300) into the clamping region (106),
- fixing the decoration (300) in the clamping region (106) by the clamping force,
- back moulding the decoration (300).

2. The method according to claim 1, wherein the decoration holder fixes the decoration in the clamping region with a constant defined clamping force.

## Revendications

1. Procédé pour injecter à l'arrière d'un décor (300) avec un dispositif de moulage par injection , où le dispositif de moulage par injection présente un support de décor (100), où le décor est rapporté sur sa bordure de sorte qu'il peut être fixé avec cette forme dans exactement une taille de fente (202 ; 204) dans une section (108, 110) de la partie de serrage (106) du support de décor (100), où la partie de serrage (106) est subdivisée en plusieurs sections (108, 110), où une première section (110) présente une première taille de fente (202) et une deuxième section (108) présente une deuxième taille de fente (204), où ces différentes sections (108, 110) présentent une taille de fente (202, 204) correspondant à l'épaisseur du décor, où la région de bordure (304) du décor est en forme de languette et est en prise sous la forme d'une languette dans la section de la partie de serrage, où le procédé comprend les étapes :
- de mise en place de la région de bordure (304) du décor (300) dans la partie de serrage (106),
- de fixation du décor (300) par la force de serrage dans la partie de serrage (106),
- d'injection à l'arrière du décor (300).

2. Procédé selon la revendication 1, dans lequel le support de décor fixe le décor avec une force de serrage définie constante dans la partie de serrage.
